# EUROPEAN PATENT APPLICATION

(11) **EP 2 955 410 A1**
(43) Date of publication of application: **16.12.2015**
(21) Application number: 15170916.9
(22) Date of filing: 05.06.2015
(51) Int. Cl.: F16F 15/123, F16F 15/129

(54) **DAMPER DEVICE FOR VEHICLE**

(30) Priority: 09.06.2014 JP 2014119098
(71) Applicant: Toyota Jidosha Kabushiki Kaisha, Toyota-shi, Aichi-ken 471-8571 (JP)
(72) Inventor: Yokouchi, Yoshimitsu, TOYOTA-SHI, AICHI-KEN, 471-8571 (JP)
(74) Representative: Intès, Didier Gérard André

(57) **Abstract**

A damper device for a vehicle comprises, a first rotational member (12), a second rotational member (14), a first elastic body (16), a hysteresis mechanism (18) and a second elastic body (22). The first rotational member (12) is rotatable about a rotational axis (C). The second rotational member (14) is rotatable relatively to the first rotational member (12). The first elastic body (16) is arranged between the first rotational member (12) and the second rotational member (14) without torsion. The hysteresis mechanism (18) is arranged between the first rotational member (12) and the second rotational member (14). The hysteresis mechanism (18) and the second elastic body (22) are connected in series between the first rotational member (12) and the second rotational member (14). The first elastic body (16) is connected in parallel with the hysteresis mechanism (18) and the second elastic body (22) between the first rotational member (12) and the second rotational member (14).

## Description

### BACKGROUND OF THE INVENTION

### 1. Field of the Invention

The invention relates to a damper device for a vehicle, and in particular to a structure of a hysteresis mechanism provided in a damper device.

### 2. Description of Related Art

A damper device that absorbs torque fluctuations is provided in a power transmission path between an engine and a drive wheel in a vehicle. In addition, a damper device including a hysteresis mechanism has been known. The hysteresis mechanism generates hysteresis torque by friction and thereby reduces (dampens) vibrations when a disc plate and a hub for constituting the damper device make relative rotation to each other. A damper device disclosed in Japanese Patent Application Publication No. 2009-19746 (JP 2009-19746 A) is one example of such a damper device. The damper device of JP 2009-19746 A generates low hysteresis torque when a torsional angle is in a region lower than a specified value, and generates high hysteresis torque when the torsional angle is in a region at the specified angle and higher.

By the way, torsional resonance, such as a shock or surge, during stop of engine start is generated in a low frequency region in general, and the high hysteresis torque is required to reduce this torsional resonance. Meanwhile, booming noise and jingling noise generated during low-speed rotation of the engine are generated at a higher frequency than the frequency at which the torsional resonance is generated. The low hysteresis torque is required to reduce these booming noise and jingling noise. Just as described, even when the torsional angle of the damper device does not change, a magnitude of the required hysteresis torque changes in accordance with the frequency of the input vibration. The damper device of JP 2009-19746 A changes the magnitude of the hysteresis torque in accordance with the torsional angle. Thus, it is difficult to achieve both a reduction in the torsional resonance and a reduction in the booming noise and the jingling noise.

### SUMMARY OF THE INVENTION

The invention provides a damper device for a vehicle that can generate high hysteresis torque at a low frequency and low hysteresis torque at a high frequency.

A damper device for a vehicle related to this invention comprises, a first rotational member, a second rotational member, a first elastic body, a hysteresis mechanism and a second elastic body. The first rotational member is rotatable about a rotational axis. The second rotational member is rotatable relatively to the first rotational member. The first elastic body is arranged between the first rotational member and the second rotational member without torsion. The hysteresis mechanism is arranged between the first rotational member and the second rotational member. The hysteresis mechanism and the second elastic body are connected in series between the first rotational member and the second rotational member. The first elastic body is connected in parallel with the hysteresis mechanism and the second elastic body between the first rotational member and the second rotational member.

With such a configuration, in the case of vibrations at the low frequency, an inertial force of a member for constituting the hysteresis mechanism is reduced due to low angular acceleration. Accordingly, a force is applied to friction surfaces of the hysteresis mechanism. Then, when the force applied to the friction surfaces exceeds a specified value, the friction surfaces slide with respect to each other, and the hysteresis torque is thereby generated. On the contrary, in the case of vibrations at the high frequency, the angular acceleration is increased. Accordingly, the inertial force of the member for constituting the hysteresis mechanism is increased, and the force applied to the friction surfaces of the hysteresis mechanism is reduced. For this reason, the friction surfaces of the hysteresis mechanism hardly slide with respect to each other, and thus the hysteresis torque is hardly generated. In this case, the first rotational member and the second rotational member are substantially connected to the first elastic body and the second elastic body, and vibrations are reduced (absorbed) by dampening of the first elastic body and the second elastic body. Thus, torsional vibrations at the low frequency, such as a shock or surge, during stop of engine start are reduced by the hysteresis torque generated in the hysteresis mechanism. Meanwhile, vibrations, such as booming noise and jingling noise, generated at the higher frequency than the torsional resonance are reduced by the dampening of the first elastic body and the second elastic body. Therefore, both of these vibrations at different frequencies can be reduced.

The first rotational member may be connected to the hysteresis mechanism, and the hysteresis mechanism may be connected to the second rotational member via the second elastic body. With such a configuration, the first rotational member, the hysteresis mechanism, the second elastic body, and the second rotational member are sequentially connected in series, and the first rotational member and the second rotational member are connected by the first elastic body. Therefore, the damper device that can reduce both of the vibrations at the low frequency and the high frequency can be realized.

The second elastic body may be arranged inward of the first elastic body in a radial direction of the damper device. With such a configuration, compared to a case where the second elastic body is arranged on a radially outer side of the rotational axis, enlargement of the device in the radial direction is prevented.

The hysteresis mechanism may be arranged inward of the first elastic body and the second elastic body in a radial direction of the damper device. With such a configuration, compared to a case where the hysteresis mechanism is arranged on the radially outer side of the rotational axis from the first elastic body and the second elastic body, the enlargement of the device in the radial direction is prevented.

The second elastic body and the hysteresis mechanism may be arranged outward of the first elastic body in a radial direction of the damper device. With such a configuration, a degree of freedom in design of the damper device can be increased. For example, the second elastic body can be designed to have low elasticity.

Maximum torque transmittable via the second elastic body may be set to a higher value than hysteresis torque generated in the hysteresis mechanism. With such a configuration, wire contact in the second elastic body caused by the torque generated in the hysteresis mechanism can be prevented. In addition, when the vibrations at the high frequency are transmitted, the vibrations can be reduced by the second elastic body.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a front view of a damper device to which the invention is applied;
FIG. 2 is a cross-sectional view of the damper device in FIG. 1;
FIG. 3 is a view of a simplified model of a power transmission path of the damper device in FIG. 1;
FIG. 4 shows a simulation result of a torsional property of the damper device in FIG. 1;
FIG. 5 is a front view of a damper device as another example of the invention;
FIG. 6 is a cross-sectional view of the damper device in FIG. 5;
FIG. 7 is a view of a simplified model of a power transmission path of the damper device in FIG. 5;
FIG. 8 is a cross-sectional view of a damper device as yet another example of the invention;
FIG. 9 is a front view of a damper device as yet another example of the invention; and
FIG. 10 is a cross-sectional view of the damper device in FIG. 9.

### DETAILED DESCRIPTION OF EMBODIMENTS

A detailed description will hereinafter be made on examples of the invention with reference to the drawings. Noted that each of the drawings is appropriately simplified or deformed and thus a dimensional ratio, a shape, and the like of each component are not necessarily depicted in a precise manner in the following examples.

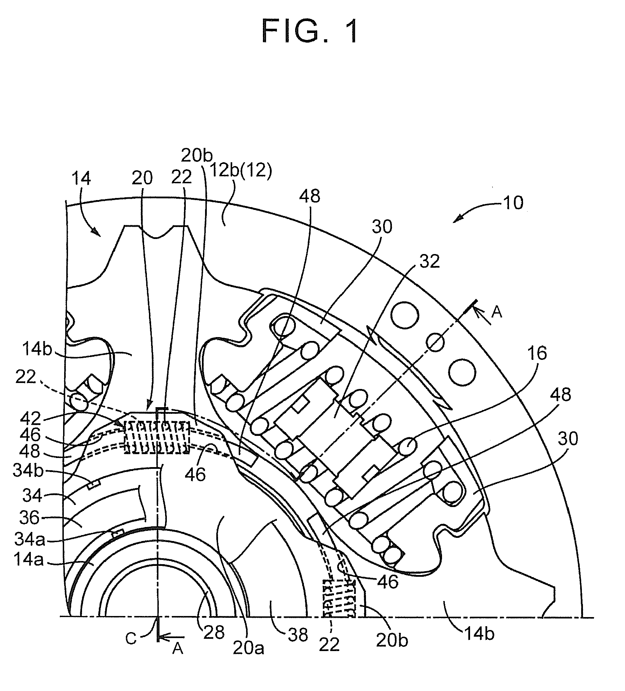

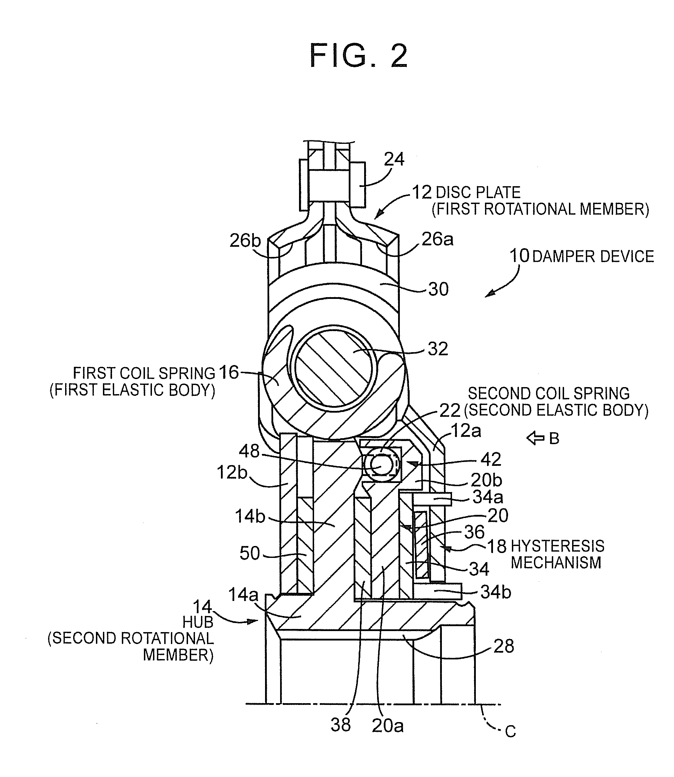

FIG. 1 is a front view of a damper device 10 to which the invention is applied, and FIG. 2 is a cross-sectional view of the damper device 10 in FIG. 1 that is cut along a cutting line A. Noted that, since the damper device 10 is configured to be generally symmetrical in a vertical direction and a horizontal direction, only a portion thereof in a circumferential direction (a first quadrant and a portion of a second quadrant) is shown in FIG. 1. In addition, FIG. 1 is a view of the damper device 10 that is seen from an arrow B direction in FIG. 2, and shows a state that a first plate 12a (a first disc plate 12a), which will be described below, is removed.

The damper device 10 is a device that is arranged in a power transmission path between an unillustrated engine and an unillustrated drive wheel and transmits power while absorbing torque fluctuations of the engine and the like. The damper device 10 is configured by including a disc plate 12 to which the power is transmitted from the unillustrated engine, a hub 14 that is connected to the unillustrated drive wheel in a manner capable of power transmission, plural first coil springs 16 arranged in a state of no torsion between the disc plate 12 and the hub 14 in a rotational direction, a hysteresis mechanism 18 that is arranged between the disc plate 12 and the hub 14, and plural second coil springs 22 that are arranged between the hysteresis mechanism 18 and the hub 14. In the damper device 10, the hysteresis mechanism 18 and the second coil springs 22 are arranged on a radially inner side of the first coil springs 16 in a radial direction of a rotational axis C of the damper device 10. Noted that the disc plate 12 is an example of the first rotational member of the invention, the hub 14 is an example of the second rotational member of the invention, the first coil spring 16 is an example of the first elastic body of the invention, and the second coil spring 22 is an example of the second elastic body of the invention.

The disc plate 12 is constructed of a pair of the first disc plate 12a (hereinafter the first plate 12a) and a second disc plate 12b (hereinafter a second plate 12b) that is rotatable about the rotational axis C. The first plate 12a and the second plate 12b each have a disc shape, and outer circumferential sections thereof are coupled to each other by a rivet 24, so as to be unable to make relative rotation. In addition, the first plate 12a and the second plate 12b are respectively formed with plural housing holes 26a, 26b (four each in this example) for housing the first coil springs 16 at equal angular intervals in the circumferential direction.

The hub 14 is provided to enable relative rotation to the disc plate 12 around the rotational axis C. The hub 14 is configured by including: a cylindrical section 14a that is in a cylindrical shape and arranged on an inner circumferential side; and plural flange sections 14b, each of which extends from the cylindrical section 14a in the radial direction of the rotational axis C.

A spline tooth 28 that is spline-fitted to an unillustrated rotational shaft is formed in an inner circumferential section of the cylindrical section 14a. For example, the four flange sections 14b are formed at equal angular intervals in the circumferential direction, and each of the first coil springs 16 is arranged between the adjacent flange sections 14b in the circumferential direction.

The first coil spring 16 is arranged between the disc plate 12 and the hub 14 and operatively connects these to allow power transmission therebetween. As shown in FIG. 2, the first coil spring 16 is housed in a space that is formed by the housing holes 26a, 26b in a state of being interposed between the first plate 12a and the second plate 12b in an axial direction. In addition, as shown in FIG. 1, the first coil spring 16 is held between the adjacent flange sections 14b via spring holding sections 30. Noted that the first coil spring 16 is arranged in a state that no torsion is generated when torque is not transmitted to the damper device 10. In addition, in this example, the four first coil springs 16 are arranged at equal angular intervals in the circumferential direction, and a cylindrical cushion 32 is provided in each of the first coil springs 16.

With the configuration as described above, the disc plate 12 and the hub 14 are connected to enable the power transmission via the first coil spring 16. For example, when the torque is transmitted from the disc plate 12 side, one end of the first coil spring 16 is pressed by the disc plate 12, and another end of the first coil spring 16 thereby presses the flange section 14b of the hub 14. At this time, the first coil spring 16 transmits the power while being elastically deformed in accordance with the torque.

On an inner circumferential side of the first coil spring 16, a cone spring 36, a hysteresis plate 34, an intermediate plate 20, and a thrust bearing 38 are sequentially arranged from the first plate 12a side toward the flange section 14b side in the axial direction between the first plate 12a and the flange section 14b of the hub 14.

The hysteresis mechanism 18 for generating hysteresis torque is constructed by the intermediate plate 20, the hysteresis plate 34, and the cone spring 36. The hysteresis mechanism 18 is arranged at a position that is on the inner circumferential side (the radially inner side) of the first coil spring 16 and the second coil spring 22 in the radial direction of the rotational axis C and that is between the first plate 12a and the thrust bearing 38 in the axial direction.

The hysteresis plate 34 is formed in an annular plate shape and formed with plural detent projections 34a and plural detent projections 34b in the circumferential direction. The plural detent projections 34a are axially projected from the inner side in the radial direction of the rotational axis C, and the plural detent projections 34b are axially projected from an outer side in the radial direction of the rotational axis C. These detent projections 34a and detent projections 34b are each fitted to a fitting hole formed in the first plate 12a, so as to disallow relative rotation between the first plate 12a and the hysteresis plate 34.

The cone spring 36 is arranged in a preloaded state between the first plate 12a and the hysteresis plate 34 in the axial direction. On an opposite side (a back side) of the hysteresis plate 34 from the cone spring 36 in the axial direction, the intermediate plate 20 is arranged to be slidable with respect to the hysteresis plate 34. In addition, the thrust bearing 38 is arranged between the intermediate plate 20 and the flange sections 14b in the axial direction, and receives a thrust force generated between the flange sections 14b and the intermediate plate 20. Noted that a configuration of the thrust bearing 38 is not particularly limited as long as the thrust bearing 38, such as a thrust roller bearing, permits relative rotation between the intermediate plate 20 and the flange sections 14b while receiving a load in a thrust direction (thrust load).

With the configuration as described above, since the cone spring 36 presses the hysteresis plate 34 toward the intermediate plate 20 in the axial direction, the hysteresis plate 34 is pressed against the intermediate plate 20 by an urging force that corresponds to an elastic restoring force of the cone spring 36. Then, when the intermediate plate 20 and the hysteresis plate 34 make the relative rotation, friction surfaces (contact surfaces or sliding surfaces) between the intermediate plate 20 and the hysteresis plate 34 slide with respect to each other, so as to generate the hysteresis torque. Accordingly, the first plate 12a and the intermediate plate 20 are connected to enable the power transmission by the friction.

The intermediate plate 20 is arranged between the hysteresis plate 34 and the thrust bearing 38 in the axial direction. The intermediate plate 20 is configured by including: a disc section 20a that abuts against the hysteresis plate 34 and the thrust bearing 38; and a spring holding section 20b that is connected to an outer circumferential section of the disc section 20a and holds the second coil spring 22.

The disc section 20a has a disc shape and is formed with a sliding surface that slides with the hysteresis plate 34 on one side in the axial direction.

The plural (four in this example) spring holding sections 20b are formed at equal angular intervals in the circumferential direction and are each formed with a housing hole 42 for housing the second coil spring 22. The second coil spring 22 is housed in this housing hole 42. In addition, circumferential grooves 46 that extends along the circumferential direction is formed at both ends of the housing hole 42 of the spring holding section 20b. These housing hole 42 and circumferential grooves 46 are continuously formed.

The hub 14 is formed with an arcuate projection 48 that is projected in the axial direction. The projection 48 is formed at a position where it is engaged with the circumferential groove 46 of the spring holding section 20b. In other words, the projection 48 is formed at the same position as the circumferential groove 46 in the radial direction of the rotational axis C and formed on both sides in the circumferential direction with the second coil spring 22 being interposed therebetween.

With the configuration as described above, the intermediate plate 20 and the hub 14 are operatively connected to each other via the second coil spring 22, and the torque that is transmitted to the intermediate plate 20 is transmitted to the hub 14 via the second coil spring 22. In detail, when the torque is transmitted to the intermediate plate 20, the spring holding section 20b presses one end of the second coil spring 22, and another end of the second coil spring 22 further presses the projection 48. In this way, the torque is transmitted to the hub 14. Noted that maximum torque that can be transmitted via the second coil spring 22 is set at a higher value than the hysteresis torque generated in the hysteresis mechanism 18. In this way, wire contact of the second coil spring 22 is prevented.

A thrust bearing 50 is arranged between the second plate 12b and the flange section 14b of the hub 14 in the axial direction. The thrust bearing 50 is constructed of the thrust roller bearing and the like, for example, and permits relative rotation between the second plate 12b and the hub 14 while receiving the load in the thrust direction.

In the damper device 10 that is configured as described above, the disc plate 12 and the hub 14 are connected via the first coil spring 16 and also connected via the hysteresis mechanism 18 and the second coil spring 22 that are connected in series.

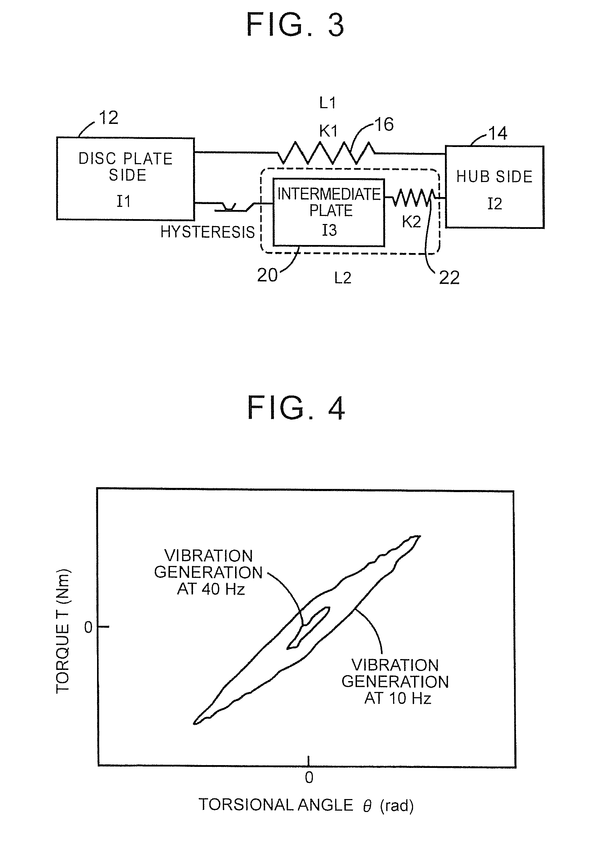

FIG. 3 shows a simplified model of the power transmission path of the damper device 10. In FIG. 3, a reference numeral I1 corresponds to moment of inertia on the disc plate side that includes an unillustrated fly wheel and the like, I2 corresponds to the moment of inertia on the hub side, I3 corresponds to the moment of inertia of the intermediate plate 20, K1 corresponds to spring rigidity (an elastic modulus) of the first coil spring 16, and K2 corresponds to spring rigidity (an elastic modulus) of the second coil spring 22.

As shown in FIG. 3, the disc plate 12 and the hub 14 are connected via the first coil spring 16. In parallel with these, the disc plate 12 and the hub 14 are connected in series via the hysteresis mechanism 18 and the second coil spring 22. In this way, a first power transmission path L1 that is constructed by connecting the disc plate 12 to the hub 14 via the first coil spring 16 and a second power transmission path L2 that is constructed by connecting the disc plate 12 to the hub 14 via the hysteresis mechanism 18 and the second coil spring 22 are formed. These first power transmission path L1 and second power transmission path L2 are formed in parallel. Thus, the power transmitted to the disc plate 12 is further transmitted to the hub 14 via the first power transmission path L1 and the second power transmission path L2.

By the way, when torsional resonance at a low frequency that is caused by a shock, surge, or the like during stop of engine start is generated, relatively high hysteresis torque is required to dampen the resonance. Meanwhile, low hysteresis torque is required to reduce vibrations, such as booming noise and jingling noise, that are generated at a higher frequency than the torsional resonance during a low-speed operation of the engine.

FIG. 4 shows a simulation result of a torsional property of the damper device 10. In FIG. 4, a horizontal axis represents a torsional angle θ (rad), and a vertical axis represents torque T (Nm). In a simulation, the moment of inertia I3 of the intermediate plate 20 is set to be approximately one thousandth of the moment of inertia I1 on the disc plate side or the moment of inertia I2 on the hub side, and the spring rigidity K2 is set to be approximately half the spring rigidity K1. These values are set in such a range that the components can be mounted in an actual vehicle.

In FIG. 4, an outer loop represents the torsional property in the case of vibration generation at 10 Hz, and an inner loop represents the torsional property in the case of the vibration generation at 40 Hz. As it can also be understood from FIG. 4, the hysteresis torque generated in the case of the vibration generation at 10 Hz as the low frequency is high, and the hysteresis torque generated in the case of the vibration generation at 40 Hz as the high frequency is low. Just as described, the hysteresis torque obtained in the case of generation of a torsional vibration at the low frequency is high, and the hysteresis torque obtained in the case of the generation of the torsional vibration at a higher frequency than the low frequency is low. Thus, a result that satisfies the required hysteresis torque that changes in accordance with the above-described frequency is obtained.

A reason why the high hysteresis torque is obtained in the case of the generation of the vibration at the low frequency and the low hysteresis torque is obtained in the case of the generation of the vibration at the high frequency as described above will be described.

When the torsional vibration at the low frequency is generated, angular acceleration is reduced. Thus, an inertial force of the intermediate plate 20 is also reduced. On the contrary, a force applied to the friction surfaces of the hysteresis mechanism 18 is increased. When the force exceeds a specified value, the friction surfaces slide with respect to each other, and the hysteresis torque is generated by a frictional force.

Meanwhile, when the torsional vibration at the high frequency is generated, the angular acceleration is increased. Thus, the inertial force of the intermediate plate 20 is also increased. On the contrary, the force applied to the friction surfaces of the hysteresis mechanism 18 is reduced. Thus, the friction surfaces do not slide in the hysteresis mechanism 18. In other words, the hysteresis mechanism 18 is substantially directly connected, and the disc plate 12 and the hub 14 are connected to the first coil spring 16 and the second coil spring 22. Accordingly, when the torsional vibration at the high frequency is generated, the hysteresis torque is reduced. Noted that a reason why the slight hysteresis torque is generated in the case of the generation of the torsional vibration at the high frequency shown in FIG. 4 is because damping items for the first coil spring 16 and the second coil spring 22 are added in the simulation.

Accordingly, it is possible by appropriately adjusting the moments of inertia I1 to I3 and the spring rigidity K1, K2 to generate the high hysteresis torque in the case of the generation of the torsional resonance at the low frequency, such as the shock or the surge, during the stop of the engine start and to generate the low hysteresis torque in the case of the generation of the torsional vibration at the high frequency, such as the booming noise or the jingling noise. Thus, it is possible in the damper device 10 to reduce the torsional vibration at the low frequency while reducing the torsional vibration at the high frequency.

As described above, according to this example, the angular acceleration is low in the case of the vibration at the low frequency. Thus, the inertial force of the intermediate plate for constituting the hysteresis mechanism 18 is reduced, and the force applies to the friction surfaces of the hysteresis mechanism 18. Then, once the force applied to the friction surfaces exceeds a specified value, the friction surfaces slide with respect to each other, and the hysteresis torque is generated. On the contrary, the angular acceleration is increased in the case of the vibration at the high frequency. Thus, the inertial force of the intermediate plate 20 is increased, and the force applied to the friction surfaces of the hysteresis mechanism 18 is reduced. For this reason, the friction surfaces of the hysteresis mechanism 18 hardly slide with respect to each other, and thus the hysteresis torque is hardly generated. In this case, the disc plate 12 and the hub 14 are substantially connected to the first coil spring 16 and the second coil spring 22, and the vibration is reduced (absorbed) by dampening of the first coil spring 16 and the second coil spring 22. Thus, the torsional vibration at the low frequency, such as the shock or the surge, during the stop of the engine start is reduced by the hysteresis torque generated in the hysteresis mechanism 18. In addition, the vibration, such as the booming noise or the jingling noise, generated at the higher frequency than the torsional resonance is reduced by the dampening of the first coil spring 16 and the second coil spring 22. Therefore, these vibrations at the different frequencies can be reduced simultaneously.

In addition, according to this example, the magnitude of the maximum torque that can be transmitted via the second coil spring 22 is set to be higher than that of the hysteresis torque generated in the above hysteresis mechanism 18. Thus, the wire contact of the second coil spring 22 by the torque generated in the hysteresis mechanism 18 can be prevented. Furthermore, when the vibration at the high frequency is transmitted, the vibration can also be reduced by the second coil spring 22.

Next, a description will be made on another example of the invention. Noted that, in the following description, the shared components with the above-description are denoted by the same reference numerals, and the description thereof will not be made.

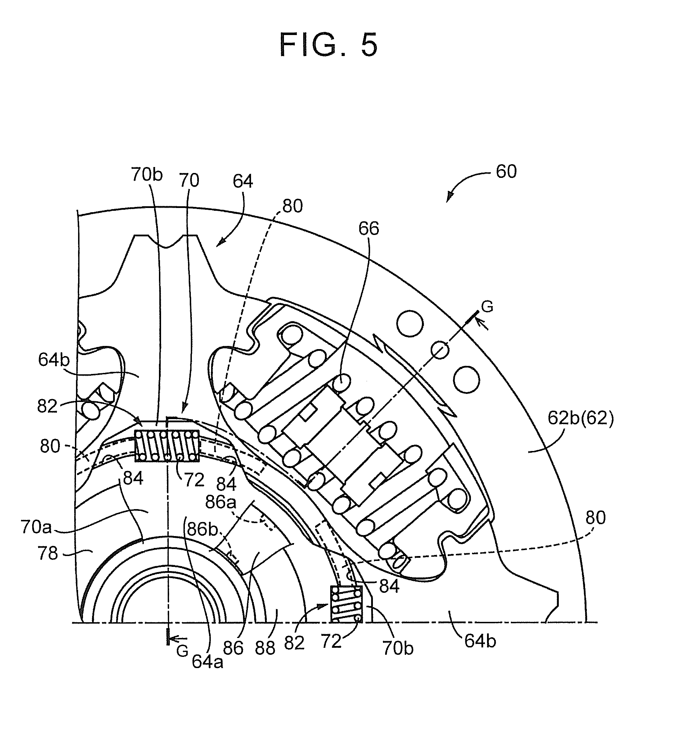

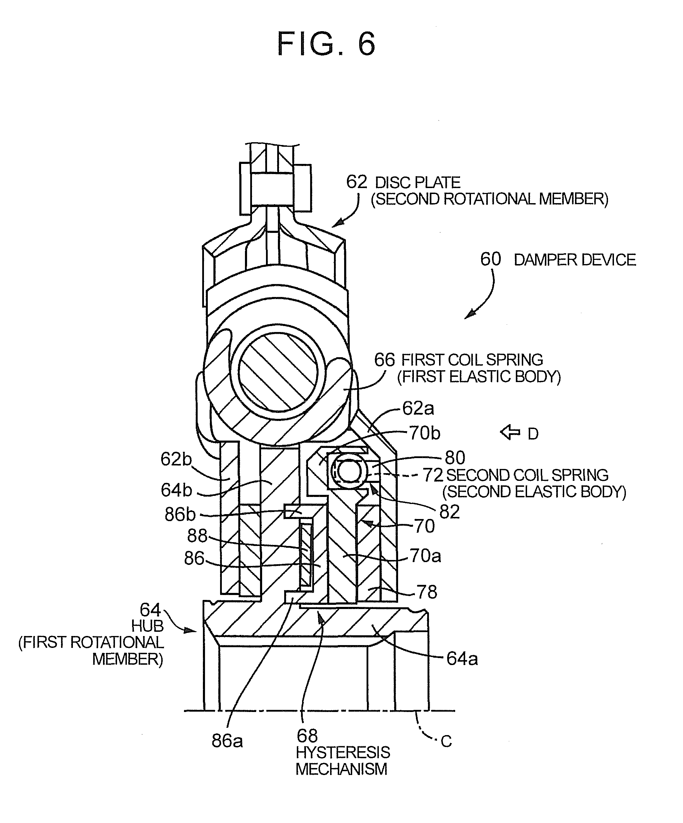

FIG. 5 is a front view of a damper device 60 as another example of the invention, and corresponds to FIG. 1 of the above-described example. In addition, FIG. 6 is a cross-sectional view of the damper device 60 in FIG. 5 that is cut along a cutting line G, and corresponds to FIG. 2 of the above-described example. Noted that FIG. 5 is a view of the damper device 60 that is seen from an arrow D direction in FIG. 6, and shows a state that a first plate 62a, which will be described below, is removed.

The damper device 60 is configured by including a disc plate 62, a hub 64 capable of making relative rotation to the disc plate 62, a first coil spring 66 arranged between the disc plate 62 and the hub 64 in the rotational direction in a state without the torsion, a second coil spring 72 and a hysteresis mechanism 68 arranged between the disc plate 62 and the hub 64. In the damper device 60, the hysteresis mechanism 68 and the second coil spring 72 are arranged on a radially inner side of the first coil spring 66 in the radial direction of the rotational axis C of the damper device 60. Noted that the disc plate 62 is an example of the second rotational member of the invention, the hub 64 is an example of the first rotational member of the invention, the first coil spring 66 is an example of the first elastic body of the invention, and the second coil spring 72 is an example of the second elastic body of the invention.

The disc plate 62 is constructed of a pair of the first disc plate 62a (hereinafter the first plate 62a) and a second disc plate 62b (hereinafter a second plate 62b) that is rotatable about the rotational axis C. The first plate 62a and the second plate 62b each have a disc shape and are coupled to each other by a rivet, so as to be unable to make relative rotation.

The hub 64 is provided to enable relative rotation to the disc plate 62 around the rotational axis C. The hub 64 is configured by including: a cylindrical section 64a in a cylindrical shape arranged on the inner circumferential side; and plural flange sections 64b extending in the radial direction of the rotational axis C from the cylindrical section 64a. The first coil spring 66 is arranged between the disc plate 62 and the hub 64 and operatively connects these to allow power transmission therebetween.

The hysteresis mechanism 68 generates the hysteresis torque, and is configured by including an intermediate plate 70, a hysteresis plate 86, and a cone spring 88.

In the damper device 60 of this example, the first plate 62a and the intermediate plate 70 for constituting the hysteresis mechanism 68 are connected to enable the power transmission via the second coil spring 72. Furthermore, the hysteresis mechanism 68 and the hub 64 are connected to enable the power transmission via friction surfaces. A thrust bearing 78, the intermediate plate 70, the hysteresis plate 86, and the cone spring 88 are sequentially arranged from the first plate 62a side toward the flange sections 64b side in the axial direction between the first plate 62a and the hub 64.

The thrust bearing 78 is arranged between the first plate 62a of the disc plate 62 and the intermediate plate 70, and receives the load in the thrust direction. In addition, the first plate 62a is formed with plural projections 80 in the circumferential direction, each of the projections 80 extending in the axial direction. A shape of the projection 80 is indicated by a broken line in FIG. 5. As indicated by the broken line in FIG. 5, the projection 80 is formed in an arcuate shape along the circumferential direction.

The intermediate plate 70 is configured by including a disc section 70a arranged on an inner circumferential side and plural spring holding sections 70b for holding the second coil spring 22 by being connected to an outer circumferential section of the disc section 70a. The disc section 70a is formed in an annular plate shape and arranged between the thrust bearing 78 and the hysteresis plate 86.

The spring holding section 70b is formed with a housing hole 82 for housing the second coil spring 72, and the second coil spring 72 is housed in this housing hole 82. In addition, circumferential grooves 84 extending along the circumferential direction are continuously formed at both ends of the housing hole 82. The projection 80 of the first plate 62a is engaged with this circumferential groove 84. Accordingly, the torque transmitted to the first plate 62a is transmitted to the intermediate plate 20 via the second coil spring 72. More specifically, the projection 80 of the first plate 62a presses one end of the second coil spring 72, and another end of the second coil spring 72 further presses the intermediate plate 70. In this way, the torque is transmitted. Just as described, the first plate 62a and the intermediate plate 70 are connected to enable the power transmission via the second coil spring 72.

The hysteresis mechanism 68 constructed of the intermediate plate 70, the hysteresis plate 86, and the cone spring 88 is arranged between the thrust bearing 78 and the hub 64 in the axial direction. In the damper device 60, the hysteresis mechanism 68 is arranged on a radially inner side of the first coil spring 66 and the second coil spring 72 in the radial direction of the rotational axis C.

The hysteresis plate 86 is formed in an annular plate shape and formed with plural detent projections 86a and plural detent projections 86b in the circumferential direction. The detent projections 86a and the detent projections 86b are axially projected from the inner side and the outer side in the radial direction of the rotational axis C, respectively. These detent projections 86a and detent projections 86b are each fitted to a fitting hole formed in the hub 64, so as to disallow relative rotation between the hysteresis plate 86 and the hub 64.

The cone spring 88 is arranged in a preloaded state between the hysteresis plate 86 and the hub 64 in the axial direction, and presses the hysteresis plate 86 in the axial direction toward the intermediate plate 70. The intermediate plate 70 and the hysteresis plate 86 slidably abut against each other. When the torque, a magnitude of which exceeds a specified value, is transmitted between the intermediate plate 70 and the hysteresis plate 86, the intermediate plate 70 and the hysteresis plate 86 slide with respect to each other, and the hysteresis torque is thereby generated. Just as described, the intermediate plate 70 is connected to the hub 64 via the friction surface (the sliding surface or the contact surface) with the hysteresis plate 86. Accordingly, the first plate 62a is connected to the hub 64 in series via the second coil spring 72 and the hysteresis mechanism 68 (the intermediate plate 70, the hysteresis plate 86, and the cone spring 88).

As described above, the first plate 62a of the disc plate 62 and the intermediate plate 70 are connected in series via the second coil spring 72 and the hysteresis mechanism 68. In addition, the disc plate 62 and the hub 64 are connected to each other via the first coil spring 66.

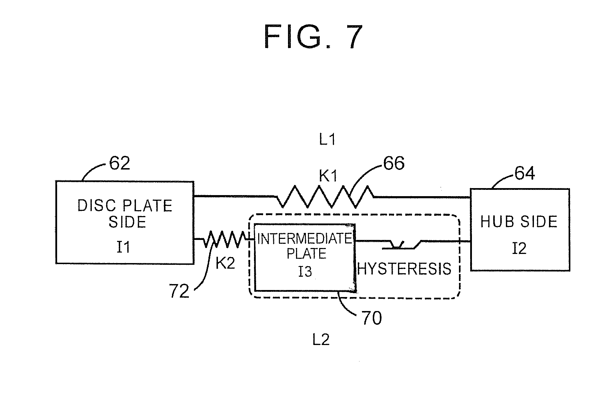

FIG. 7 is a view of a simplified model of a power transmission path of the damper device 60. As it can also be understood from FIG. 7, the disc plate 62 and the hub 64 are connected to each other via the first coil spring 66, and the disc plate 62 and the hub 64 are connected in series via the second coil spring 72 and the hysteresis mechanism 68. In addition, the first coil spring 66 is connected in parallel with the second coil spring 72 and the hysteresis mechanism 68 between the disc plate 62 and the hub 64.

When the damper device 60 of this example is compared with the above-described damper device 10, a coupling order of the second coil spring 72 and the hysteresis mechanism 68 is simply reversed between the disc plate 62 and the hub 64. In the damper device 60 configured as described above, basic operative principle does not differ from that of the above-described damper device 10. Thus, the same effects as those of the damper device 10 of the above-described example can be obtained. Noted that, since the detailed operation of the damper device 60 is the same as that of the damper device 10 of the above-described example, the description will not be made.

As described above, the same effects as those of the damper device 10 of the above-described example can be obtained by the damper device 60 of this example.

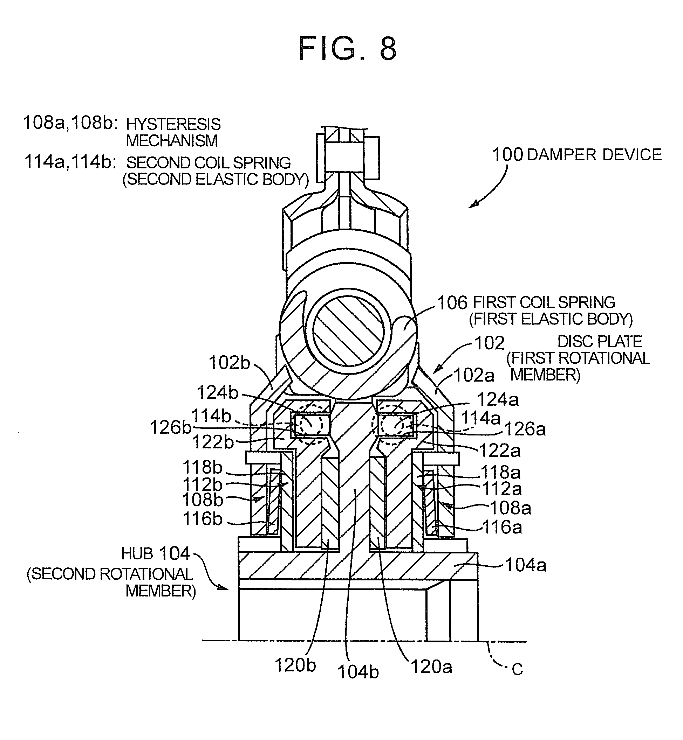

FIG. 8 is a cross-sectional view of a damper device 100 as yet another example of the invention. In the damper device 100 of this example, second coil springs 114a, 114b are axially aligned on an inner circumferential side of a first coil spring 106. A description will hereinafter be made on a structure of the damper device 100.

The damper device 100 is configured by including a disc plate 102, a hub 104 capable of making relative rotation to the disc plate 102, the first coil spring 106 arranged between the disc plate 102 and the hub 104 in the rotational direction in a state without the torsion, a pair of hysteresis mechanisms 108a, 108b arranged between the disc plate 102 and the hub 104, and a pair of the second coil springs 114a, 114b respectively arranged between the hub 104 and each of paired intermediate plates 112a, 112b. Noted that the disc plate 102 is an example of the first rotational member of the invention, the hub 104 is an example of the second rotational member of the invention, the first coil spring 106 is an example of the first elastic body of the invention, and the second coil springs 114a, 114b are examples of the second elastic body of the invention.

The disc plate 102 is constructed of a pair of first disc plate 102a (hereinafter a first plate 102a) and a second disc plate 102b (hereinafter a second plate 102b) that is rotatable about the rotational axis C. The first plate 102a and the second plate 102b each have a disc shape and are coupled to each other by a rivet, so as to be unable to make relative rotation.

The hub 104 is provided to enable relative rotation to the disc plate 102 around the rotational axis C. The hub 104 is configured by including: a cylindrical section 104a in a cylindrical shape arranged on an inner circumferential side; and plural flange sections 104b extending in the radial direction of the rotational axis C from the cylindrical section 104a at equal angular intervals.

The first coil spring 106 is arranged between the disc plate 102 and the hub 104 and connects these to allow the power transmission therebetween.

In addition, in the damper device 100 of this example, the disc plate 102 is connected in series to the hub 104 via the hysteresis mechanism 108a and the second coil spring 114a, and the disc plate 102 is connected in series to the hub 104 via the hysteresis mechanism 108b and the second coil spring 114b.

A cone spring 116a, a hysteresis plate 118a, an intermediate plate 112a, and a thrust bearing 120a are sequentially arranged from the first plate 102a side toward the flange section 104b side in the axial direction on the inner circumferential side of the first coil spring 106. The above intermediate plate 112a, cone spring 116a, and hysteresis plate 118a constitute the hysteresis mechanism 108a.

Similar to the above-described damper device 10, rotation of the hysteresis plate 118a is locked by the first plate 102a and thus cannot make relative rotation to the first plate 102a. The cone spring 116a is arranged in the preloaded state between the hysteresis plate 118a and the first plate 102a, and presses the hysteresis plate 118a toward the intermediate plate 112a. Friction surfaces (sliding surfaces or contact surfaces) between the intermediate plate 112a and the hysteresis plate 118a are configured to be slidable and generate the frictional force when the intermediate plate 112a and the hysteresis plate 118a slide with respect to each other. The hysteresis mechanism 108a for generating the hysteresis torque is configured just as described.

The thrust bearing 120a is arranged between the intermediate plate 112a and the flange section 104b. The thrust bearing 120a allows relative rotation between the intermediate plate 112a and the flange section 104b while receiving the thrust force generated between the intermediate plate 112a and the flange section 104b.

A spring holding section 122a is formed on an outer circumferential section of the intermediate plate 112a and holds the second coil spring 114a. In addition, a projection 124a is formed in the flange section 104b of the hub 104 and engaged with a circumferential groove 126a formed in the spring holding section 122a. With the configuration as described above, the intermediate plate 112a is connected to the hub 104 via the second coil spring 114a. Noted that a mechanism for connecting the intermediate plate 112a and the hub 104 via the second coil spring 114a is the same as that in the above-described damper device 10.

Accordingly, the first plate 102a and the hub 104 are connected in series via the hysteresis plate 118a, the intermediate plate 112a, and the second coil spring 114a for constituting the hysteresis mechanism 108a.

In addition, a cone spring 116b, a hysteresis plate 118b, an intermediate plate 112b, and a thrust bearing 120b are sequentially arranged from the second plate 102b side toward the flange section 104b side in the axial direction on the inner circumferential side of the first coil spring 106. The above intermediate plate 112b, cone spring 116b, and hysteresis plate 118b constitute the hysteresis mechanism 108b.

Similar to the above-described damper device 10, rotation of the hysteresis plate 118b is locked by the second plate 102b and thus cannot make relative rotation to the second plate 102b. The cone spring 116b is arranged in the preloaded state between the hysteresis plate 118b and the second plate 102b, and presses the hysteresis plate 118b toward the intermediate plate 112b. Friction surfaces (sliding surfaces or contact surfaces) between the intermediate plate 112b and the hysteresis plate 118b are configured to be slidable and generate the frictional force when the intermediate plate 112b and the hysteresis plate 118b slide with respect to each other. The hysteresis mechanism 108b for generating the hysteresis torque is configured just as described.

The thrust bearing 120b is arranged between the intermediate plate 112b and the flange section 104b. The thrust bearing 120b allows relative rotation between the intermediate plate 112b and the flange section 104b while receiving the thrust force generated between the intermediate plate 112b and the flange section 104b.

A spring holding section 122b is formed on an outer circumferential section of the intermediate plate 112b and holds the second coil spring 114b. In addition, a projection 124b is formed in the flange section 104b of the hub 104 and engaged with a circumferential groove 126b formed in a spring holding section 122b. With the configuration as described above, the intermediate plate 112b is connected to the hub 104 via the second coil spring 114b.

Accordingly, the second plate 102b and the hub 104 are connected in series via the hysteresis plate 118b, the intermediate plate 112b, and the second coil spring 114b for constituting the hysteresis mechanism 108b.

In the damper device 100 configured as described above, the power transmission path, which is formed by connecting the hysteresis mechanism 108b and the second coil spring 114b in series at a position between the disc plate 102 and the hub 104, is simply added to the above-described damper device 10, and the basic operative principle thereof does not differ. Thus, the same effects as those of the above-described example can be obtained. Furthermore, in addition to the first coil spring 106 and the second coil spring 114a, the second coil spring 114b can receive the torque transmitted to the damper device 100. Thus, the magnitude of the torque transmitted to each of the coil springs is reduced. Accordingly, since each of the coil springs can be arranged on the inner circumferential side in the radial direction of the rotational axis C, the damper device 100 can be downsized in the radial direction. Moreover, the rigidity of each of the coil springs can be set low.

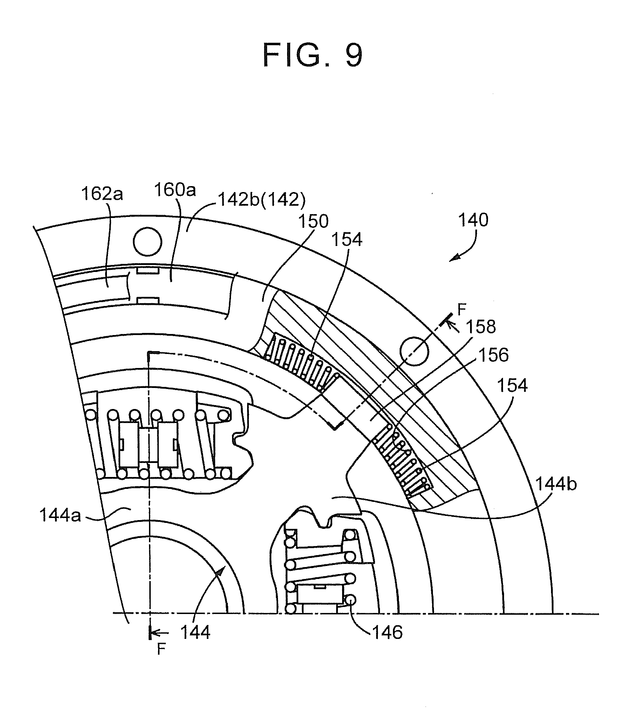

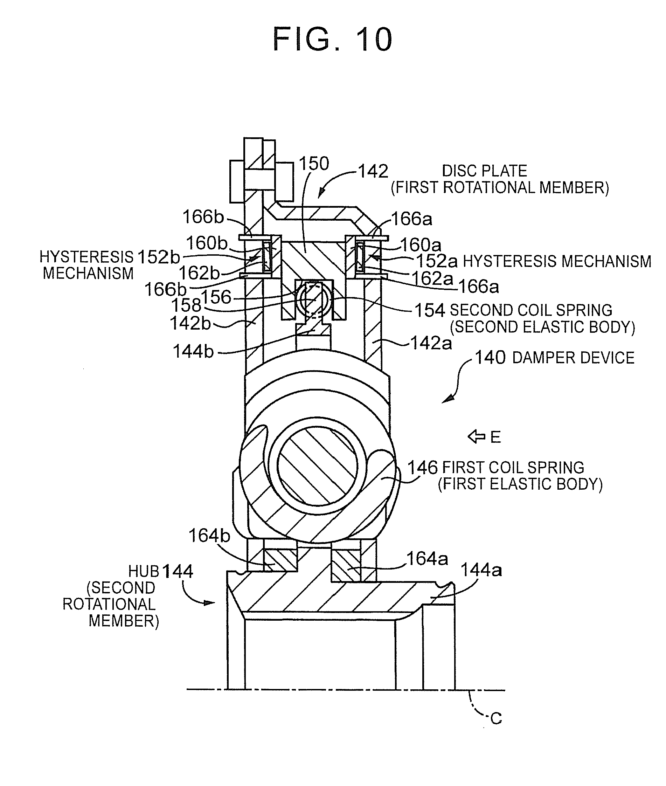

FIG. 9 is a front view of a damper device 140 as yet another example of the invention, and FIG. 10 is a cross-sectional view of the damper device 140 that is cut along a cutting line F. Noted that FIG. 9 is a view that is seen from an arrow E direction in FIG. 10, and shows a state that a first plate 142a, which will be described below, is removed. In the damper device 140 of this example, a second coil spring 154 and hysteresis mechanisms 152a, 152b for connecting a disc plate 142 and a hub 144 are arranged on an outer side (a radially outer side) of a first coil spring 146 in the radial direction of the rotational axis C of the damper device 140. A description will hereinafter be made on a structure of the damper device 140 by using FIG. 9 and FIG. 10.

The damper device 140 is configured by including the disc plate 142, the hub 144 capable of making relative rotation to the disc plate 142, the first coil spring 146 arranged in a state without the torsion in the rotational direction, a pair of the hysteresis mechanisms 152a, 152b arranged on an outer circumferential side of the first coil spring 146, and the second coil spring 154 arranged on an inner circumference of an intermediate plate 150 for constituting the hysteresis mechanisms 152a, 152b. Noted that the disc plate 142 is an example of the first rotational member of the invention, the hub 144 is an example of the second rotational member of the invention, the first coil spring 146 is an example of the first elastic body of the invention, and the second coil spring 154 is an example of the second elastic body of the invention.

The disc plate 142 is constructed of a pair of the first disc plate 142a (hereinafter the first plate 142a) and a second disc plate 142b (hereinafter a second plate 142b) that is rotatable about the rotational axis C. The first plate 142a and the second plate 142b each have a disc shape, and are coupled to each other by a rivet, so as to be unable to make relative rotation.

The hub 144 is provided to enable relative rotation to the disc plate 142 around the rotational axis C. The hub 14 is configured by including: a cylindrical section 144a in a cylindrical shape arranged on the inner circumferential side; and plural flange sections 144b extending in the radial direction of the rotational axis C from the cylindrical section 144a at equal angular intervals.

The first coil spring 146 is arranged between the disc plate 142 and the hub 144 and connects these to allow the power transmission therebetween. In addition, the disc plate 142 and the hub 144 are connected via the hysteresis mechanisms 152a, 152b and the second coil spring 154 that are connected in series. A description will hereinafter be made on structures of the hysteresis mechanisms 152a, 152b and the second coil spring 154.

In the damper device 140, the hysteresis mechanisms 152a, 152b and the second coil spring 154 are arranged on a radially outer side of the first coil spring 146 in the radial direction of the rotational axis C of the damper device 140. The hysteresis mechanism 152a is constructed of the intermediate plate 150, a hysteresis plate 160a, and a cone spring 162a. Meanwhile, the hysteresis mechanism 152b is constructed of the intermediate plate 150, a hysteresis plate 160b, and a cone spring 162b.

The intermediate plate 150 has an annular shape and arranged in a gap provided between the first plate 142a and the second plate 142b on the outer circumferential side of the first coil spring 146. In addition, fan-shaped notches 156 are formed at a center in the axial direction of an inner circumferential section of the intermediate plate 150, and the number of the notches 156 corresponds to the number of the flange sections 144b. The notch 156 has a specified length in the circumferential direction, and is notched to be slightly larger than an outer diameter (a coil outer diameter) of the second coil spring 154 in the axial direction. In addition, an end of the flange section 144b of the hub 144 in the radial direction of the rotational axis C is formed with a projection 158 that extends in the radial direction to a space formed by the notch 156, and this projection 158 is housed in this space.

The projection 158 is arranged at a center in the circumferential direction of the space formed by the notch 156 in a state that the torque is not transmitted to the damper device 140. Then, the second coil spring 154 is arranged between the end of the notch 156 in the circumferential direction and each of both ends of the projection 158 in the circumferential direction. With the configuration as described above, the intermediate plate 150 and the hub 144 are connected to enable the power transmission via the second coil spring 154.

The hysteresis plates 160a, 160b and the cone springs 162a, 162b for respectively constituting the hysteresis mechanisms 152a, 152b are arranged between the disc plate 142 and each of both ends of the intermediate plate 150 in the axial direction. More specifically, the hysteresis plate 160a and the cone spring 162a for constituting the hysteresis mechanism 152a are arranged between the first plate 142a and the intermediate plate 150 in the axial direction. The hysteresis plate 160a is formed in an annular plate shape and formed with plural detent projections 166a in the circumferential direction in an inner peripheral section and an outer peripheral section of the hysteresis plate 160a. The plural detent projections 166a axially extend toward the first plate 142a side. These detent projections 166a are each fitted to a fitting hole formed in the first plate 142a, so as to disallow relative rotation between the first plate 142a and the intermediate plate 150.

The cone spring 162a is arranged in the preloaded state between the first plate 142a and the hysteresis plate 160a in the axial direction. The cone spring 162a presses the hysteresis plate 160a toward the intermediate plate 150 in the axial direction. Friction surfaces (sliding surfaces or contact surfaces) between the hysteresis plate 160a and the intermediate plate 150 are configured to be slidable and generate the frictional force when the hysteresis plate 160a and the intermediate plate 150 slide on the friction surfaces. The hysteresis mechanism 152a is configured just as described.

The hysteresis plate 160b and the cone spring 162b for constituting the hysteresis mechanism 152b are arranged between the second plate 142b and the intermediate plate 150 in the axial direction. The hysteresis plate 160b is formed in an annular plate shape and formed with plural detent projections 166b in an inner peripheral section and an outer peripheral section of the hysteresis plate 160b. The plural detent projections 166b axially extend toward the second plate 142b side. These detent projections 166b are each fitted to a fitting hole formed in the second plate 142b, so as to disallow relative rotation between the second plate 142b and the intermediate plate 150.

The cone spring 162b is arranged in the preloaded state between the second plate 142b and the hysteresis plate 160b in the axial direction. The cone spring 162b presses the hysteresis plate 160b toward the intermediate plate 150 in the axial direction. Friction surfaces (sliding surfaces or contact surfaces) between the hysteresis plate 160b and the intermediate plate 150 are configured to be slidable and generate the frictional force when the hysteresis plate 160b and the intermediate plate 150 slide on the friction surfaces. The hysteresis mechanism 152a is configured just as described.

In addition, a thrust bearing 164a is arranged between the first plate 142a and the flange section 144b in the inner circumferential section of the disc plate 142. The thrust bearing 164a allows relative rotation between the first plate 142a and the flange section 144b while receiving a thrust load generated between these. Furthermore, a thrust bearing 164b is arranged between the second plate 142b and the flange section 144b in the inner circumferential section of the disc plate 142. The thrust bearing 164b allows relative rotation between the second plate 142b and the flange section 144b while receiving the thrust load generated between these.

In the damper device 140 configured as described above, the hysteresis mechanisms 152a, 152b and the second coil spring 154 are connected in series between the disc plate 142 and the hub 144, and the same power transmission path as that in the damper device 10 (FIG. 3) of the above-described example is provided. Thus, the same effects as those of the damper device 10 of the above-described examples and the like can be obtained. In addition, since the hysteresis mechanisms 152a, 152b and the second coil spring 154 are arranged on the outer circumferential side of the first coil spring 146, a degree of freedom in design, such as reduction in the spring rigidity of the second coil spring 154, is increased.

The detailed description has been made so far on the examples of the invention on the basis of the drawings. Meanwhile, the invention is also applied to other aspects.

For example, similar to the damper device 10, in the damper device 100 of the above-described example, the first plate 102a, the hysteresis mechanism 108a, and the second coil spring 114a are sequentially connected in series to the hub 104. In addition, the second plate 102b, the hysteresis mechanism 108b, and the second coil spring 114b are sequentially connected in series to the hub 104. In this configuration, a connection order can further be changed as in the damper device 60. More specifically, in the damper device 100, the first plate 102a, the second coil spring 114a, and the hysteresis mechanism 108a may sequentially be connected in series to the hub 104, and the second plate 102b, the second coil spring 114b, and the hysteresis mechanism 108b may sequentially be connected in series to the hub 104. Alternatively, in the damper device 100, while the first plate 102a, the hysteresis mechanism 108a, and the second coil spring 114a may sequentially be connected in series, the second plate 102b, the second coil spring 114b, and the hysteresis mechanism 108b may sequentially be connected in series.

In addition, in the damper device of the above-described example, the disc plate 142, the hysteresis mechanisms 152a, 152b, and the second coil spring 154 are sequentially connected in series to the hub 144. In this configuration, the disc plate 142, the second coil spring 154, and the hysteresis mechanisms 152a, 152b may further sequentially be connected in series.

Furthermore, in each of the damper devices 10, 60, 100, 140 of the above-described examples, the cone spring is used as the elastic member for pressing the hysteresis plate in the axial direction. However, the elastic member is not limited thereto but is not particularly limited as long as it is a member such as a coil spring or rubber for pressing the hysteresis plate in the axial direction.

Moreover, each of the thrust bearing 38 and the like of the above-described examples is constructed of the thrust roller bearing, for example. However, the thrust bearing is not particularly limited as long as it receives the thrust load, such as a needle bearing.

Noted that what has been described above is merely an embodiment. The invention can be carried out in aspects, to which various modifications and improvement are added on the basis of knowledge of those skilled in the art.

## Claims

1. A damper device for a vehicle, the damper device **characterized by** comprising:
a first rotational member (12; 64; 102; 142) rotatable about a rotational axis;
a second rotational member (14; 62; 104; 144) rotatable relatively to the first rotational member (12; 64; 102; 142);
a first elastic body (16; 66; 106; 146) arranged between the first rotational member (12; 64; 102; 142) and the second rotational member (14; 62; 104; 144) without torsion;
a hysteresis mechanism (18; 68; 108a, 108b; 152a, 152b) arranged between the first rotational member (12; 64; 102; 142) and the second rotational member (14; 62; 104; 144); and
a second elastic body (22; 72; 114a, 114b; 154),
wherein the hysteresis mechanism (18; 68; 108a, 108b; 152a, 152b) and the second elastic body (22; 72; 114a, 114b; 154) are connected in series between the first rotational member (12; 64; 102; 142) and the second rotational member (14; 62; 104; 144), and
the first elastic body (16; 66; 106; 146) is connected in parallel with the hysteresis mechanism (18; 68; 108a, 108b; 152a, 152b) and the second elastic body (22; 72; 114a, 114b; 154) between the first rotational member (12; 64; 102; 142) and the second rotational member (14; 62; 104; 144).

2. The damper device according to claim 1,
wherein the first rotational member (12; 64; 102; 142) is connected to the hysteresis mechanism (18; 68; 108a, 108b; 152a, 152b), and the hysteresis mechanism (18; 68; 108a, 108b; 152a, 152b) is connected to the second rotational member (14; 62; 104; 144) via the second elastic body (22; 72; 114a, 114b; 154).

3. The damper device according to claim 1 or 2,
wherein the second elastic body (22; 72; 114a, 114b) is arranged inward of the first elastic body (16; 66; 106) in a radial direction of the damper device.

4. The damper device according to any one of claims 1 to 3,
wherein the hysteresis mechanism (18; 68; 108a, 108b) is arranged inward of the first elastic body (16; 66; 106) and the second elastic body (22; 72; 114a, 114b) in a radial direction of the damper device.

5. The damper device according to claim 1 or 2,
wherein the second elastic body (154) and the hysteresis mechanism (152a, 152b) are arranged outward of the first elastic body (146) in a radial direction of the damper device.

6. The damper device according to any one of claims 1 to 5,
wherein maximum torque transmittable via the second elastic body (22; 72; 114a, 114b; 154) is set to a higher value than hysteresis torque generated in the hysteresis mechanism (18; 68; 108a, 108b; 152a, 152b).
